# EUROPÄISCHE PATENTSCHRIFT

(11) **EP 2 507 041 B1**
(45) Veröffentlichungstag und Bekanntmachung des Hinweises auf die Patenterteilung: **26.02.2014**
(21) Anmeldenummer: 10784534.9
(22) Anmeldetag: 30.11.2010
(51) Int. Cl.: B29C 70/52, C08G 18/34, C08G 18/65, C08J 5/04, C08G 18/22, C08G 18/32, C08G 18/66, C08G 18/76

(54) **PULTRUSIONSHARZSYSTEM AUF BASIS VON POLYURETHAN**
PULTRUSION RESIN SYSTEM BASED ON POLYURETHANE
SYSTÈME DE RÉSINE DE PULTRUSION À BASE DE POLYURÉTHANE

(30) Priorität: 01.12.2009 EP 09177603
(43) Veröffentlichungstag der Anmeldung: 10.10.2012
(73) Patentinhaber: BASF SE, 67056 Ludwigshafen (DE)
(72) Erfinder: NIENKEMPER, Katrin, 49076 Osnabrück (DE); NEUHAUS, Bert, 46535 Dinslaken (DE); FISSER-SCHMALKUCHE, Daniela, 49152 Bad Essen (DE)
(86) Internationale Anmeldenummer: PCT/EP2010/068518
(87) Internationale Veröffentlichungsnummer: WO 2011/067246

(56) Entgegenhaltungen:
- DE-A1- 19 644 017
- US-A1- 2008 090 921
- US-A1- 2008 090 966

## Beschreibung

Die vorliegende Erfindung betrifft ein Pultrusionsharzsystem, enthaltend (a) Di- oder Polyisocyanate, (b) Verbindungen mit mindestens zwei gegenüber Isocyanaten reaktiven Gruppen, (c) Katalysator, (d) höherfunktionelle Säure mit einer Funktionalität von größer gleich 2 und gegebenenfalls (e) weitere Hilfs- und Zusatzstoffe, wobei die höherfunktionelle Säure einen Siedepunkt von mindestens 200 °C bei Normaldruck aufweist und in der Verbindung mit mindestens zwei gegenüber Isocyanaten reaktiven Gruppen löslich ist. Weiter ist Gegenstand der Erfindung ein Verfahren zur Herstellung eines Pultrudats sowie ein solches Pultrudat.

Die Pultrusion, auch Strangziehverfahren genannt, ist ein kontinuierliches Verfahren zur Herstellung von faserverstärkten Profilen mit konstantem Querschnitt. Eine Pultrusionsanlage besteht typischerweise aus einer Imprägniereinheit und einem beheizten Werkzeug sowie einer Abzugsanlage, die den Prozess in Gang hält. Die Imprägnierung der Fasern erfolgt in einem offenen Bad oder in einer geschlossenen Injektionsbox. Hier wird das Verstärkungsmaterial, beispielsweise Glasfaserrovings oder Glasfasermatten, mit dem Harz benetzt. Im beheizten Werkzeug erfolgt dann Formgebung und die Aushärtung des Composites. Das fertige Profil wird mittels einer Abzugsanlage aus dem Werkzeug gezogen und abschließend in die gewünschten Längen geschnitten. Um den Pultrusionsprozess möglichst effizient zu gestalten werden hohe Prozessgeschwindigkeiten bei sehr guten mechanischen Eigenschaften des Pultrudats und einer hohen Oberflächengüte angestrebt.

Die Verwendung von zweikomponentigen Polyurethansystemen für den Pultrusionsprozess wurde bereits von Bayer, Huntsman, Milgard Manufacturing Incorporated, Resin Systems Inc. und weiteren beschrieben. Es werden hauptsächlich Polyetherpolyole mit einer Funktionalität von 3.0 eingesetzt, die in Gegenwart von Aminen bzw. Metallkomplexen als Katalysatoren sowie diversen Additiven mit Isocyanaten, häufig polymerem MDI, umgesetzt werden. Dabei hat sich gezeigt, dass sich mit zunehmender Prozessgeschwindigkeit die Oberflächengüte verschlechtert. Häufig wird ausreagiertes Polyurethan bzw. PU-Puder auf der Profiloberfläche beobachtet. Darüber hinaus verschlechtert sich die Benetzungsqualität bei hohen Abzugsgeschwindigkeiten und damit die mechanischen Eigenschaften der entsprechenden Pultrudate. Diese Phänomene limitieren wiederum die maximale Prozessgeschwindigkeit.

Huntsman begegnet diesem Problem in WO 2005/049301 durch den Einsatz zweier Metallkatalysatören. Bayer setzt Systeme auf Basis von DMC-Polyolen (US 2008/0090921) oder Graftpolyolen (US 2008/0087373) ein, bzw. verwendet nichtmischbare PU-Systeme (US 2008/0090996). Darüber hinaus erwähnen sowohl Bayer als auch Huntsman die prinzipielle Verwendung von Säuren zur teilweisen Neutralisierung, also Blockierung, der Aminkatalyse. Als konkrete Beispiele werden in WO 2005038118 Ameisensäure, Essigsäure, 2-Ethylhexansäure und Ölsäure genannt.

Milgard Manufacturing Incorporated beschreibt in US 2007/0113983, US 2007/0116941 und US 2007/0117921 die prinzipielle Möglichkeit dem Polyurethansystem zur Verbesserung der Oberflächengüte polymere Additive zuzusetzen, die den Schrumpf des Harzes verringern. In einer Konzentration von bevorzugt 4 bis 10%, bezogen auf das Gesamtharzsystem, werden diese sogenannten "low profile additives" hinzugesetzt. Unter polymeren Additiven versteht man hier Polystyrole, Styrol-Acrylat Copolymere, Methacrylatharze, Polyvinylacetate und geschützte Polypropylenoxide.

Keine der im Stand der Technik diskutierten Ansätze liefert eine zufriedenstellende Lösung für die Herstellung von Pultrudaten mit guter Oberflächengüte bei hohen Pultrusionsgeschwindigkeiten, insbesondere bei komplexeren Profilgeometrien. Aufgabe der vorliegenden Erfindung war es daher, ein Pultrusionsharzsystem zu liefern, mit dem Pultrudate mit hervorragender Oberflächengüte bei hohen Pultrusionsgeschwindigkeiten von mehr als einem Meter pro Minute, insbesondere bei komplexeren Profilgeometrien, erhalten werden.

Überraschenderweise wurde gefunden, dass die erfindungsgemäße Aufgabe gelöst wird durch ein Pultrusionsharzsystem, enthaltend (a) Di- oder Polyisocyanate, (b) Verbindungen mit mindestens zwei gegenüber Isocyanaten reaktiven Gruppen, (c) Katalysator, (d) höherfunktionelle Säure mit einer Funktionalität von größer gleich 2 und gegebenenfalls (e) weitere Hilfs- und Zusatzstoffe, wobei die höherfunktionelle Säure einen Siedepunkt von mindestens 200 °C bei Normaldruck aufweist und in der Verbindung mit mindestens zwei gegenüber Isocyanaten reaktiven Gruppen löslich ist.

Dabei wird im Rahmen der Erfindung unter einem Pultrusionsharzsystem ein System, bestehend aus unterschiedlichen Komponenten verstanden, das nach dem Zusammenmischen der Komponenten geeignet ist, mit Fasermaterial ein Pultrudat zu bilden.

Als Di- oder Polyisocyanate (a) können alle zur Herstellung von Polyurethanen bekannten aliphatischen, cycloaliphatischen oder aromatischen Isocyanaten eingesetzt werden. Beispiele sind 2,2'-, 2,4- und 4,4'-Diphenylmethandiisocyanat, die Mischungen aus monomeren Diphenylmethandiisocyanaten und höherkernigen Homologen des Diphenylmethandiisocyanats (polymeres MDI), Isophorondiisocyanat (IPDI) oder dessen Oligomere, Toluylendiisocyanat (TDI), beispielsweise Isomere des Toluylendiisocyanats, wie 2,4- oder 2,6-Toluylendiisocyanat oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Vorzugsweise werden als Di- oder Polyisocyanate (a) Isocyanate auf Basis des Diphenylmethandiisocyanats eingesetzt, insbesondere polymeres MDI. Vorzugsweise weist das Di- und Polyisocyanate (a) eine Funktionalität von 2,0 bis 2,9, besonders bevorzugt 2,1 bis 2,8 auf. Die Viskosität der Di- oder Polyisocyanate (a) bei 25 °C nach DIN 53019-1 bis 3 liegt dabei vorzugsweise zwischen 5 und 600 mPas und besonders bevorzugt zwischen 10 und 300 mPas.

Di und Polyisocyanate (a) können auch in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Verbindungen mit mindestens zwei gegenüber Isocyanaten reaktiven Gruppen (Bestandteil (a-2)), zum Prepolymer umgesetzt werden. Der NCO-Gehalt erfindungsgemäßer Polyisocyanatprepolymere beträgt vorzugsweise von 20 bis 33 Gew.-% NCO, besonders bevorzugt von 25 bis 32 Gew.-% NCO.

Verbindungen mit mindestens zwei gegenüber Isocyanaten reaktiven Gruppen (a-2) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Verbindungen mit mindestens zwei gegenüber Isocyanaten reaktiven Gruppen Polyether- oder Polyesterole, wie die nachfolgend unter (b) beschriebenen, eingesetzt werden. Vorzugsweise werden als Verbindungen mit mindestens zwei gegenüber Isocyanaten reaktiven Gruppen (a-2) Polyether- oder Polyesterole, enthaltend sekundäre OH-Gruppen, eingesetzt, wie beispielsweise Polypropylenoxyd. Die Polyether- oder Polyesterole, besitzen dabei vorzugsweise eine Funktionalität von 2 bis 4, besonders bevorzugt von 2 bis 3.

Besonders bevorzugt werden keine Polyisocyanatprepolymere eingesetzt.

Als Verbindungen mit mindestens zwei gegenüber Isocyanaten reaktiven Gruppen (b), im Rahmen dieser Erfindung auch als "Polyole" bezeichnet, können alle Verbindungen eingesetzt werden, die zumindest zwei gegenüber Isocyanaten reaktive Gruppen, wie OH-, SH-, NH-, NH₂-, -COOH und CH-acide Gruppen aufweisen, wobei der Anteil an sekundären OH-Gruppen, bezogen auf die Anzahl an gegenüber Isocyanaten reaktiven Gruppen, mindestens 50 %, bevorzugt mindestens 60 %, besonders bevorzugt mindestens 70 % und insbesondere mindestens 80 % beträgt.

Gewöhnlich werden Polyetherole und/oder Polyesterole mit 2 bis 8 mit Isocyanat reaktiven Wasserstoffatomen und niedermolekulare Polyole, wie Glycerin, Dipropylenglykol und/oder Tripropylenglykol, eingesetzt. Die OH-Zahl dieser Verbindungen liegt üblicherweise im Bereich von 30 bis 2000 mg KOH /g, vorzugsweise im Bereich von 40 und 1000 mg KOH/g. Dabei liegt die mittlere OH-Zahl aller eingesetzten Verbindungen mit mindestens zwei gegenüber Isocyanaten reaktiven Gruppen (b) bei 100 bis 1000 mg KOH/g, vorzugsweise bei 300 bis 900 mg KOH/g.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6 und besonders bevorzugt 2 bis 4 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, Ethylenoxid, 1,2-Propylenoxid, oder 1,2- bzw. 2,3-Butylenoxid, jeweils alleine oder in Form von Mischungen, und vorzugsweise 1,2-Propylenoxid, und/oder Ethylenoxid, insbesondere 1,2-Propylenoxid eingesetzt.

Als Startermoleküle kommen beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Die eingesetzten Polyesteralkohole werden zumeist durch Kondensation von mehrfunktionellen Alkoholen mit 2 bis 12 Kohlenstoffatomen, wie Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und den Isomeren von Naphthalindicarbonsäuren oder deren Anhydriden, hergestellt.

Als weitere Ausgangsstoffe bei der Herstellung der Polyester können auch hydrophobe Stoffe mit verwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol-%, besonders bevorzugt 4 bis 15 Mol-%.

Die eingesetzten Polyesterole haben vorzugsweise eine Funktionalität von 1,5 bis 5, besonders bevorzugt 1,8 - 3,5.

In einer besonders bevorzugten Ausführungsform werden als Verbindungen mit gegenüber Isocyanaten reaktiven Gruppen (b) Polyetherole, insbesondere ausschließlich Polyetherole eingesetzt. Vorzugsweise weisen die Polyetherole eine reale mittlere Funktionalität von 2 bis 4, besonders bevorzugt 2,5 bis 3,5 insbesondere 2,8 bis 3,2, eine OH-Zahl von 300 bis 900 mg KOH/g und einen Gehalt an sekundären OH-Gruppen von mindestens 50 %, bevorzugt mindestens 60 %, besonders bevorzugt mindestens 70 % und insbesondere mindestens 80 % auf. Dabei wird als Polyetherol vorzugsweise Polyetherol auf Basis von auf Basis von Glycerin als Starter und 1,2 Propylenoxid eingesetzt.

Als Katalysatoren (c) können alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, wie Zinn-, Zink-, Titan-, Zirkonium-, Eisen-, Quecksilber- oder Bismuthkomplexe vorzugsweise organische Zinnverbindungen, wie Zinn-(II)-salze von organischen Carbonsäuren, z.B. Zinn-(II)-acetat, Zinn-(II)-octoat, Zinn-(II)-ethylhexanoat und Zinn-(II)-laurat und die Di-alkylzinn-(IV)-salze von organischen Carbonsäuren, z.B. Dibutylzinndiacetat, Dibutylzinndilaurat, Dibutylzinnmaleat und Dioctylzinndiacetat, sowie Phenylquecksilberneodecanoat, Bismutcarboxylate, wie Bismut(III)-neodecanoat, Bismut-2-etyhlhexanoat und Bismut-octanoat oder Mischungen in Betracht. Weitere mögliche Katalysatoren sind stark basische Aminkatalysatoren. Beispiele hierfür sind Amidine, wie 2,3-Dimethyl-3,4,5,6-tetrahydropyrimidin, tertiäre Amine, wie Triethylamin, Triethylendiamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan, 1,8-Diazabicyclo-(5,4,0)-undecen-7-en und Alkanolaminverbindungen, wie Triethanolamin, Triisopropanolamin, N-Methyl- und N-Ethyl-diethanolamin und Dimethylethanolamin. Die Katalysatoren können einzeln oder als Mischungen verwendet werden. Gegebenenfalls werden als Katalysatoren (c) Mischungen aus Metallkatalysatoren und basischen Aminkatalysatoren verwendet.

In einer besonderen Ausführungsform werden diese Katalysatoren als blockierte Katalysatoren eingesetzt, beispielsweise mit Protonendonatoren blockierte Katalysatoren. Als Protonendonatoren werden vorzugsweise Carbonsäuren oder Phenole und/oder weitere aromatische Alkohole eingesetzt. Besonders bevorzugt werden als Protonendonatoren aromatische Alkohole eingesetzt. Dabei beträgt das Molverhältnis von als Protonendonator wirkende Gruppen im Protonendonator zu protonierbaren Amingruppen im Aminkatalysator vorzugsweise 0,9 : 1,0 bis 1,1 : 1,0. Besonders bevorzugt wird dabei als blockierter Aminkatalysator blockiertes 1,8-Diaza-bicyclo(5.4.0)undec-7-en eingesetzt. Als mögliche Blockierungsmittel können Phenole oder Carbonsäurederivate eingesetzt werden, bespielsweise Phenol oder Phthalsäure.

Der Anteil des Katalysators (c) beträgt dabei vorzugsweise 0,05 bis 10 Gew.-%, besonders bevorzugt 0,1 bis 5 Gew.-% und insbesondere 0,1 bis 2,5 Gew.-%, bezogen auf das Gesamtgewicht der Komponenten (b) bis (e). Vorzugsweise wird dabei der Katalysator so eingesetzt, dass die Gelzeit des erfindungsgemäßen Pultrusionsharzsystems nach Vermischen der Komponenten (a) bis (e) bei 25 °C größer als 10 Minuten, besonders bevorzugt größer als 12 Minuten und kleiner 60 Minuten und insbesondere größer als 15 und kleiner als 60 Minuten beträgt. Weiter wird der Katalysator so gewählt, dass eine vollständige Aushärtung des erfindungsgemäßen Pultrusionsharzsystems nach Vermischen der Komponenten (a) bis (e) bei 220 °C innerhalb von 60 Sekunden, besonders bevorzugt von 0 bis 45 Sekunden und insbesondere von 5 bis 30 Sekunden erfolgt.

Zur Bestimmung der Gelzeit werden dabei die Komponenten zur Herstellung der Polyurethanreaktionsmischung bei Raumtemperatur in einen Becher eingewogen und mittels Speed-Mixer 30 Sekunden bei 2000 Umdrehungen pro Minute) miteinander verrührt. 100 g des Gesamtsystems werden anschließend in einen separaten Becher eingewogen und es wird die Gelzeit mit Hilfe eines Holzspatels bestimmt. Die Gelzeit entspricht der Zeitdifferenz zwischen dem Start der Vermischung und der Aushärtung, also der ersten Klumpenbildung.

Zur Bestimmung der vollständigen Aushärtung bei 220 °C werden die Komponenten zur Herstellung der Polyurethanreaktionsmischung bei Raumtemperatur in einen Becher eingewogen und mittels Speed-Mixer 30 Sekunden bei 2000 Umdrehungen pro Minute miteinander verrührt. 10 mL des Systems werden mit Hilfe einer Pasteurpipette auf eine Platte mit einer Oberflächentemperatur von 220 °C gegeben. Die Zeit (in s) zwischen Auftragen auf die Platte und kompletter Aushärtung entspricht der Härtungszeit bei der entsprechenden Temperatur. Komplette Aushärtung ist erreicht, wenn die Probe bei Berührung mit einem Holzspatel nicht mehr klebt.

Bei der höherfunktionalen Säure (d) handelt es sich um eine Säure mit einer Funktionalität von zwei oder größer und einem Siedepunkt von mindestens 200 °C bei Normaldruck. Dabei ist es erfindungswesentlich, dass die Säure in der Verbindung mit mindestens zwei gegenüber Isocyanat reaktiven Gruppen (b) löslich ist. Dabei wird im Rahmen der Erfindung unter der Löslichkeit der Säure in der Verbindung mit mindestens zwei gegenüber Isocyanat reaktiven Gruppen (b) verstanden, dass bei 25 °C eine Konzentration von mindestens 0,1 Gew.-%, vorzugsweise mindestens 1 Gew.-%, besonders bevorzugt mindestens 2 Gew.-% und insbesondere mindestens 5 Gew.-% der Säure in der Komponente (b) zu einem stabilen System führt, das auch nach einer Woche Stehen bei Raumtemperatur nicht in zwei oder mehr makroskopisch getrennte Phasen separiert. Als makroskopisch getrennte Phasen werden dabei Phasen verstanden, die sich in der Konzentration der Säure voneinander unterscheiden und mindestens Gebiete mit 0,1 mm Durchmesser umfassen.

Dabei werden als Säuren alle Stoffe mit einem pKs Wert von kleiner 15, besonders bevorzugt kleiner 7 und insbesondere kleiner 4 verstanden. Dabei bezieht sich der pKs-Wert auf die Abgabe des ersten Protons. Vorzugsweise enthalten die höherfunktionellen Säuren (d) mindestens eine Säuregruppe, ausgewählt aus Carbonsäuregruppen, Phosphonsäuregruppen, Phosphorsäuregruppen und Sulfonsäuregruppen. Neben den mindestens zwei Säuregruppen können die höherfunktionellen Säuren (d) noch gegenüber Isocyanat reaktive Gruppen, wie OH-Gruppen, SH-Gruppen, NH-Gruppen oder NH₂-Gruppen enthalten. Die Säurezahl der höherfunktionellen Säure beträgt vorzugsweise 50 bis 1000 mg KOH/g, besonders bevorzugt 80 bis 900 mg KOH/g und insbesondere 100 bis 800 mg KOH/g. Vorzugsweise weisen die höherfunktonellen Säuren einen hohen Anteil an Heteroatomen, insbesondere an Sauerstoff, auf. So beträgt das molare Verhältnis von Sauerstoff zu Kohlenstoff in der Säure vorzugsweise mindestens 1 : 5, besonders bevorzugt mindestens 1 : 4. Beispiele für solche Säuren (d) sind Kondensationsprodukte mehrwertiger Säuren mit Verbindungen mit gegenüber Säuren reaktiven Gruppen, die unter Abspaltung von Wasser zu den Kondensationsprodukten reagieren können. Als mehrwertige Säuren zur Herstellung der Kondensationsprodukte können beispielsweise mehrwertiger Carbonsäuren, wie aliphatische mehrwertige Carbonsäuren, beispielsweise Bernsteinsäure, Glutarsäure, Adipinsäure, Korksäure, Azelainsäure, Sebacinsäure, Decandicarbonsäure, Maleinsäure und Fumarsäure oder aromatische mehrwertige Carbonsäuren, beispielsweise Phthalsäure, Isophthalsäure, Terephthalsäure Naphthalindicarbonsäuren und deren Isomeren oder anorganischer Säuren, wie Phosphorsäure eingesetzt werden. Als Verbindungen mit gegenüber Säuren reaktiven Gruppen, die zur Herstellung der Kondensationsprodukte verwendet werden können, können beispielsweise alle unter (b) beschriebenen Verbindungen mir gegenüber Isocyanaten reaktiven Gruppen, vorzugsweise Polyetherolen auf Basis von Alkylenoxyden, Polyesterolen sowie niedermolekularen Verbindungen, wie Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder Amine eingesetzt werden. Sollen noch gegenüber Isocyanaten reaktive Gruppen der Kondensationsprodukte aus mehrwertiger Säuren und Verbindungen mit gegenüber Säuren reaktiven Gruppen verbleiben, wird die Kondensationsreaktion so durchgeführt, dass nicht alle gegenüber Säure reaktiven Gruppen, insbesondere nicht alle Hydroxylgruppen, mit Säure zum Kondensationsprodukt reagieren.

Weiter können als höherfunktionelle Säure (d) durch Homo- oder Copolymerisation von Acrylsäure, Methacrylsäure, Polyphosphorsäure, Polyphosphonsäure oder Sulfonsäuren, wie Styrolsulfonsäure, erhältliche Produkte eingesetzt werden. Als Co-Monomere eignen sich alle mit diesen Säuren copolymerisierbaren Monomere.

Der Anteil der höherfunktionalen Säure (d), bezogen auf das Gesamtgewicht der Verbindungen mit mindestens zwei gegenüber Isocyanaten reaktiven Gruppen (b) beträgt vorzugsweise 0,1 bis 10 Gew.-%, besonders bevorzugt 0,5 bis 5 Gew.-% und insbesondere 1 bis 3 Gew.-%.

Als weitere Hilfs- und Zusatzstoffe (e) können alle zur Herstellung von Polyurethanen bekannten Hilfs- und Zusatzstoffe verwendet werden. Genannt seien beispielsweise oberflächenaktive Substanzen, Trennmittel, Haftvermittler, Füllstoffe, Farbstoffe, Pigmente, Flammschutzmittel, Hydrolyseschutzmittel, Viskositätserniedriger, Wasserfänger, Entschäumer sowie fungistatisch und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

So können beispielsweise als Additive zur Wasseradsorption Aluminosilikate, ausgewählt aus der Gruppe der Natriumaluminosilikate, Kaliumaluminosilikate, Calciumaluminosilikate, Cäsiumaluminosilikate, Bariumaluminosilikate, Magnesiumaluminosilikate, Strontiumaluminosilikate, Natriumaluminophosphate, Kaliumaluminophosphate, Calciumaluminophosphate und Mischungen davon, eingesetzt werden. Besonders bevorzugt werden Mischungen von Natrium-, Kalium- und Calciumaluminosilikaten in Ricinusöl als Trägersubstanz verwendet.

Vorzugsweise hat das Additiv zur Wasserabsorption eine zahlengemittelte Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ångstroem.

Wenn ein Additiv zur Wasserabsorption zugegeben wird, geschieht dies vorzugsweise in Mengen größer einem Gewichtsteil, besonders bevorzugt im Bereich von 0,5 bis 5 Gewichtsteilen, bezogen auf das Gesamtgewicht der Komponenten (b) bis (e).

Als Haftvermittler können Silane, wie Isocyanatsilane, Epoxysilane oder Aminosilane eingesetzt werden. Solche Substanzen sind beispielsweise in E. P. Plueddemann, Silane Coupling Agents, 2nd ed., Plenum Press, New York, 1991 und in2. K. L. Mittal, ed., Silanes and Other Coupling Agents, VSP, Utrecht, 1992 beschrieben.

Als interne Trennmittel können alle bei der Herstellung von Polyurethanen üblichen Trennmittel verwendet werden, beispielsweise langkettige Carbonsäuren, insbesondere Fettsäuren, wie Stearinsäure, Amine langkettiger Carbonsäuren, wie Stearinamid, Fettsäureester, Metallsalze langkettiger Carbonsäuren, wie Zinkstearat, oder Silicone. Besonders geeignet sind die speziell für die Pultrusion erhältlichen Internen Trennmittel, z.B. von Axel Plastics oder Technick Products. Die internen Trennmittel von Technick Products enthalten vermutlich Phosphorsäure und Fettsäuren. Die Internen Trennmittel von Axel Plastics enthalten vermutlich Fettsäuren.

Als Viskositätserniedriger können beispielsweise γ-Butyrolacton, Propylencarbonat, aber auch Reaktivverdünner wie Dipropylenglykol, Diethylenglykol und Tripropylengykol eingesetzt werden.

Das erfindungsgemäße Pultrusionsharzsystem enthält vorzugsweise weniger als 2 Gew.-%, besonders bevorzugt weniger als 1 Gew.-% Stoffe, die einen Siedepunkt von kleiner 200 °C bei Normaldruck aufweisen. Vorzugsweise weist das Pultrusionsharzsystem unmittelbar nach Vermischen der Komponenten (a) bis (e) eine Viskosität von kleiner 1500 mPas, besonders bevorzugt kleiner 1200 mPas und insbesondere kleiner 1000 mPas bei 25 °C nach DIN 53019-1 bis 3 auf. Dabei werden die Komponenten (a) bis (e) vorzugsweise in solchen Mengenverhältnissen vermischt, dass der Isocyanatindex 90 bis 140, besonders bevorzugt 100 bis 130 und insbesondere 115 bis 125 beträgt. Dabei wird unter dem Isocyanatindex im Rahmen der vorliegenden Erfindung das stöchiometrische Verhältnis an Isocyanatgruppen zu mit Isocyanat reaktiven Grupperi, multipliziert mit 100, verstanden. Unter mit Isocyanat reaktiven Gruppen werden dabei alle in der Reaktionsmischung enthaltenen, mit Isocyanat reaktiven Gruppen, verstanden, nicht aber die Isocyanatgruppe selbst.

Weiter ist Gegenstand der vorliegenden Erfindung ein Verfahren zur Herstellung eines Pultrudats. Bei diesem Verfahren werden die Komponenten eines erfindungsgemäßen Pultrusionsharzsystems zu einer Polyurethanreaktionsmischung vermischt, mit der erhaltenen Reaktionsmischung wird ein Fasermaterial benetzt. Anschließend wird das benetzte Fasermaterial geformt und die Reaktionsmischung ausgehärtet. Dabei wird im Rahmen der Erfindung die Mischung der Komponenten (a) bis (e) bei Reaktionsumsätzen kleiner 90 %, bezogen auf die Isocyanatgruppen, als Reaktionsmischung bezeichnet.

Die Vermischung der Komponenten des erfindungsgemäßen Pultrusionsharzsystems kann dabei in für die Herstellung von Polyurethanbasierten Reaktionsmischungen üblicher Weise erfolgen, beispielsweise im Hochdruck oder Niederdruckverfahren.

Als Fasermaterial können alle Arten von Endlosfasern verwendet werden. Dabei wird unter Endlosfaser ein Fasermaterial verstanden, das eine Länge von mindestens mehreren Metern aufweist. Diese werden beispielsweise von Rollen abgewickelt. Dabei können als Fasermaterial Einzelfasern, sogenannte Faserrovings, geflochtene Fasern, Fasermatten, Fasergelege und Fasergewebe eingesetzt werden. Insbesondere bei Faserverbünden, wie geflochtenen Fasern, verdrillten Fasern, Fasergelegen oder Fasergeweben können in die in diesen Fasergebilden enthaltenen Einzelfasern auch kürzere Einzelfasern enthalten sein, der Faserverbund selbst muss aber als Endlosmaterial vorliegen. Vorzugsweise enthält oder besteht das Fasermaterial aus Glasfaser, Glasmatten, Kohlefaser, Polyesterfaser, Naturfaser, Aramidfaser, Basaltfaser oder Nylonfaser, besonders bevorzugt werden Carbonfasern bzw. Glasfasern eingesetzt.

Die Benetzung des Fasermaterials kann dabei in einem offenen oder vorzugsweise einem geschlossenen Werkzeug erfolgen. Vorzugsweise beträgt die Temperatur beim Benetzen des Fasermaterials weniger als 100 °C, vorzugsweise 0 bis 75 °C, besonders bevorzugt 10 bis 50 °C und insbesondere 15 bis 35 °C. Der Anteil an Fasermaterial beträgt dabei vorzugsweise 10 bis 90 Gew. % besonders bevorzugt 30 bis 90 Gew. % insbesondere 60 bis 90 Gew. % bezogen auf das fertige Pultrudat.

Nach dem Benetzen zieht man vorzugsweise das mit der Reaktionsmischung benetzte Fasermaterial durch ein Formwerkzeug. Dabei kann das Formwerkzeug eine beliebige, aber möglichst konstante Querschnittsform, senkrecht zur Zugrichtung des benetzten Fasermaterials aufweisen, beispielsweise schlitzförmig oder rund sein, eine L-Form, eine T-Form oder auch komplexere Formen aufweisen. Dabei weist das Formwerkzeug vorzugsweise eine Temperatur von 150 bis 250 °C auf, wodurch die Polyurethanreaktionsmischung zum fertigen Polyurethan aushärtet.

Vorzugsweise wird das Pultrudat aus der Form mit einer Geschwindigkeit von mehr als einem Meter pro Minute abgezogen. Besonders bevorzugt beträgt die Abzugsgeschwindigkeit mehr als 1,5 Meter pro Minute und insbesondere mehr als 2,0 Meter pro Minute. Das erhaltene Pultrudat wird üblicherweise auf die gewünschte Länge zugeschnitten.

Ein weiterer Gegenstand der vorliegenden Erfindung ist ein Pultrudat, erhältlich nach dem erfindungsgemäßen Verfahren. Dabei weist das Pultrudat eine exzellente Oberflächengüte und Benetzungsqualität auf. Die mechanischen Werte der Pultrudate sind bei Abzugsgeschwindigkeiten von 0,5 m/min und Abzugsgeschwindigkeiten von 1,5 m/min bei Flachprofilen gleich.

Im Folgenden soll die Erfindung anhand von Beispielen verdeutlicht werden:

### Folgende Stoffe wurden eingesetzt:

### Polyole

Polyol 1: Glycerin gestartetes Triol, propoxyliert, OHZ: 400 mg KOH/g
Polyol 2: Glycerin gestartetes Triol, propoxyliert, OHZ: 800 mg KOH/g
Polyol 3: Diol, Propylenglykol propoxyliert, OHZ: 250 mg KOH/g
Polyol 4: Glycerin gestartetes Triol, propoxyliert und ethoxyliert, OHZ: 42 mg KOH/g und einem Ethylenoxydanteil von 72,5 Gew.-%

### Katalysator:

| | |
|---|---|
| Katalysator 1: | Mischung aus 1,8-Diaza-bicyclo(5.4.0)undec-7-en und Phenol in Diethylenglykol |
| Katalysator 2: | Dimethylzinncarboxylat |
| Katalysator 3: | Phenylquecksilberneodecanoat |
| Katalysator 4: | 1,8-Diaza-bicyclo(5.4.0)undec-7-en |
| Katalysator 5: | Mischung aus 1,8-Diazabicyclo(5.4.0)undec-7-en und Phthalsäure in Monoethylenglykol |

### Trennmittel:

TL-550 HB von Technick Products, INT-1947MCH oder INT-1948MCH von Axel Plastics, alles kommerziell erhältliche Interne Trennmittel für die Pultrusion.

### Polymere Säuren:

Säure 1: Säure, auf Basis von Estern der Phthalsäure mit Glycolen. Säurezahl = 130 mg KOH/g
Säure 2: Säure auf Basis von Estern der Phthalsäure mit einem Triols auf Basis von Propylenoxyd und Glycerin als Starter und einer OH Zahl von 400 mg KOH/g. Säurezahl = 190 mg KOH/g

### Isocyanate:

Monomeres MDI, auf Basis von 2,4- und 4,4' MDI
Polymeres MDI mit einer Viskosität bei 25 °C von 210 mPas

### Durchführung:

Eingesetzt wurde eine Pultrusionsanlage, die eine geschlossene Injektionsbox und ein beheizbares Formwerkzeug umfasste. Der Innendurchmesser des Flachprofils im Formwerkzeug betrug 3x50mm. Entsprechend wurden Pultrudate dieser Maße hergestellt. Es wurden Standard-Glasfasern, geeignet für die Pultrusion verwendet (beispielsweise von PPG Fiber Glass Europe: Hybon 2001 Roving, 2400 Tex) und durch die Injektionsbox und das Formwerkzeug gezogen. Zusätzlich kamen Glasfasermatten zum Einsatz (beispielsweise von PPG Fiber Glass Europe, im Verhältnis Glasfaserrovings zu Glasfasermatten von 60:20 Gew.%). Die Gesamtkonzentration des Verstärkungsmaterials, bezogen auf das Gesamtgewicht des Pultrudats betrug ca. 80 Gew. %. Die in den Beispielen und Vergleichsbeispielen angegebenen Einsatzstoffe wurden bei Raumtemperatur in einer Niederdruckmischmaschine mit einem Statikmixer bei dem angegebenen Isocyanatindex vermischt. Anschließend wurde die Reaktionsmischung in die Injektionsbox injiziert, wodurch die Glasfasern mit der Reaktionsmischung benetzt wurden. Die benetzten Glasfasern wurden mittels einer Abzugsanlage kontinuierlich durch das Formwerkzeug gezogen und das Polyurethansystem im beheizten Formwerkzeug gehärtet.

Zum Ende des Prozesses werden die Profile in die gewünschten Längen geschnitten.

### Beispiele:

Die Anteile an den Komponenten A und B werden im Folgenden als Gewichtsteile angegeben.

### Beispiel 1:

| A-Komponente | | B-Komponente | |
|---|---|---|---|
| Polyol 1 | 75,0 | Polymeres MDI | 100 |
| Dipropylenglycol | 20,0 | | |
| Katalysator 1 | 1,0 | | |
| Säure 1 | 2,0 | | |
| INT-1948MCH | 5,0 | | |

### Index:100

### Systemcharakteristika:

| | |
|---|---|
| Gelzeit bei Raumtemperatur: | 17:00 min |
| Reaktivität bei 220 °C | 15 s |

### Ergebnisse Pultrusionsversuche:

Pultrusionsgeschwindigkeit: 1,5 m/min
Oberflächengüte: sehr gut, kein Puder

### Vergleich 1:

| A-Komponente | | B-Komponente | |
|---|---|---|---|
| Polyol 1 | 75,0 | Polymeres MDI | 100 |
| Dipropylenglycol | 20,0 | | |
| Katalysator 1 | 1,0 | | |
| INT-1948MCH | 5,0 | | |

### Index:100

### Systemcharakteristika:

| | |
|---|---|
| Gelzeit bei Raumtemperatur: | 17:00 min |
| Reaktivität bei 220 °C | 22 s |

### Ergebnisse Pultrusionsversuche:

Pultrusionsgeschwindigkeit: 1,0 m/min
Oberflächengüte: gut, wenig Puder

### Beispiel 2:

| A-Komponente | | B-Komponente | |
|---|---|---|---|
| Polyol 2 | 75,0 | Polymeres MDI | 100 |
| Polyol 3 | 10,0 | | |
| Polyol 4 | 10,0 | | |
| Katalysator 2 | 1,0 | | |
| Säure 1 | 2,0 | | |
| INT-1947MCH | 5,0 | | |

### Index:110

### Systemcharakteristika:

| | |
|---|---|
| Gelzeit bei Raumtemperatur: | 12:20 min |
| Aushärtung bei 220 °C | 30 s |

### Ergebnisse Pultrusionsversuche:

Pultrusionsgeschwindigkeit: 1,5 m/min
Oberflächengüte: gut, wenig Puder

### Vergleich 2

| | | | |
|---|---|---|---|
| Polyol 2 | 75,0 | Polymeres MDI | 100 |
| Polyol 3 | 10,0 | | |
| Polyol 4 | 10,0 | | |
| Katalysator 2 | 1,0 | | |
| INT-1947MCH | 5,0 | | |

### Index:110

### Systemcharakteristika:

| | |
|---|---|
| Gelzeit bei Raumtemperatur: | 11:15 min |
| Aushärtung bei 220 °C | 31 s |

### Ergebnisse Pultrusionsversuche:

Pultrusionsgeschwindigkeit: 1,5 m/min
Oberflächengüte: rau, viel Puder

### Beispiel 3:

| A-Komponente | | B-Komponente | |
|---|---|---|---|
| Polyol 1 | 50,0 | Polymeres MDI | 80 |
| Polyol 2 | 45,0 | Monomeres MDI | 20 |
| Katalysator 3 | 0,2 | | |
| Säure 1 | 2,0 | | |
| INT-1947MCH | 5,0 | | |

### Index:120

### Systemcharakteristika:

| | |
|---|---|
| Gelzeit bei Raumtemperatur: | 18:00 min |
| Aushärtung bei 220 °C | 20 s |

### Ergebnisse Pultrusionsversuche:

Pultrusionsgeschwindigkeit: 2,5 m/min
Oberflächengüte: sehr gut, glatte Oberfläche, kein Puder

### Vergleich 3:

| A-Komponente | | B-Komponente | |
|---|---|---|---|
| Polyol 1 | 50,0 | Polymeres MDI | 80 |
| Polyol 2 | 45,0 | Monomeres MDI | 20 |
| Katalysator 3 | 0,2 | | |
| INT-1947MCH | 5,0 | | |

### Index:120

### Systemcharakteristika:

| | |
|---|---|
| Gelzeit bei Raumtemperatur: | 12:00 min |
| Aushärtung bei 220 °C | 37 s |

### Ergebnisse Pultrusionsversuche:

Pultrusionsgeschwindigkeit: 1,5 m/min
Oberflächengüte: sehr gut, glatte Oberfläche, kein Puder

### Beispiel 4:

| A-Komponente | | B-Komponente | |
|---|---|---|---|
| Polyol 1 | 75,0 | polymeres MDI | 100 |
| Dipropylenglykol | 20,0 | | |
| Katalysator 4 | 0,5 | | |
| Säure 2 | 1,5 | | |
| TL-550 HB | 5,0 | | |

### Index:100

### Systemcharakteristika:

| | |
|---|---|
| Gelzeit bei Raumtemperatur: | 15:30 min |
| Aushärtung bei 220 °C | 15 s |

### Ergebnisse Pultrusionsversuche:

Pultrusionsgeschwindigkeit: 2,0 m/min
Oberflächengüte: gut, wenig Puder

### Vergleich 4:

| A-Komponente | | B-Komponente | |
|---|---|---|---|
| Polyol 1 | 75,0 | polymeres MDI | 100 |
| Dipropylenglykol | 20,0 | | |
| Katalysator 4 | 0,5 | | |
| TL-550 HB | 5,0 | | |

### Index:100

### Systemcharakteristika:

| | |
|---|---|
| Gelzeit bei Raumtemperatur: | 15:25 min |
| Aushärtung bei 220 °C | 28 s |

### Ergebnisse Pultrusionsversuche:

Pultrusionsgeschwindigkeit: 2,0 m/min
Oberflächengüte: rau, Puder

### Beispiel 5:

| A-Komponente | | B-Komponente | |
|---|---|---|---|
| Polyol 1 | 75,0 | polymeres MDI | 100 |
| Dipropylenglykol | 20,0 | | |
| Katalysator 5 | 1,0 | | |
| Säure 1 | 2,0 | | |
| INT-1948MCH | 5,0 | | |

### Index:100

### Systemcharakteristika:

| | |
|---|---|
| Gelzeit bei Raumtemperatur: | 18:45 min |
| Aushärtung bei 220 °C | 28 s |

### Ergebnisse Pultrusionsversuche:

Pultrusionsgeschwindigkeit: 2,0 m/min
Oberflächengüte: gut, wenig Puder

### Vergleich 5:

| A-Komponente | | B-Komponente | |
|---|---|---|---|
| Polyol 1 | 75,0 | polymeres MDI | 100 |
| Dipropylenglykol | 20,0 | | |
| Katalysator 5 | 1,0 | | |
| INT-1948MCH | 5,0 | | |

### Index:100

### Systemcharakteristika:

| | |
|---|---|
| Gelzeit bei Raumtemperatur: | 18:00 min |
| Aushärtung bei 220 °C | 37 s |

### Ergebnisse Pultrusionsversuche:

Pultrusionsgeschwindigkeit: 1,5 m/min
Oberflächengüte: rau, Puder

Die Versuche zeigen, dass die Oberflächen der erhaltenen Pultrudate bei ansonsten gleichen Bedingungen durch die Zugabe der höherfunktionalen Säure verbessert wurden bzw. dass durch die Zugabe der höherfunktionalen Säure bei höheren Prozessgeschwindigkeiten konstant gute Oberflächengüten erzielt werden konnten.

## Patentansprüche

1. Pultrusionsharzsystem, enthaltend
a) Di- oder Polyisocyanate,
b) Verbindungen mit mindestens zwei gegenüber Isocyanaten reaktiven Gruppen,
c) Katalysator,
d) höherfunktionelle Säure mit einer Funktionalität von größer gleich 2 und gegebenenfalls
e) weitere Hilfs- und Zusatzstoffe,
wobei die höherfunktionelle Säure einen Siedepunkt von mindestens 200 °C bei Normaldruck aufweist und In der Verbindung mit mindestens zwei gegenüber Isocyanaten reaktiven Gruppen löslich ist.

2. Pultruslonsharzsystem nach Anspruch 1, **dadurch gekennzeichnet, dass** die höherfunktionelle Säure eine Säurezahl von 50 bis 1000 mg KOH/g aufweist.

3. Pultruslonsharzsystem nach Anspruch 1 oder 2, **dadurch gekennzeichnet, dass** das molare Verhältnis von Sauerstofftomen zu Kohlenstoffatomen der höherfunktionelle Säure (d) mindestens 1 : 5 ist.

4. Pultruslonsharzsystem nach einem der Ansprüche 1 bis 3, **dadurch gekennzeichnet, dass** die höherfunktionelle Säure (d) ein Kondensationsprodukt einer mindestens zweiwertigen Säure mit einer Verbindung mit gegenüber Säure reaktiven Gruppen ist.

5. Pultrusionsharzsystem nach einem der Ansprüche 1 bis 4, **dadurch gekennzeichnet, dass** der Anteil der höherfunktionellen Säure (d), bezogen auf das Gesamtgewicht der Verbindungen mit mindestens zwei gegenüber Isocyanaten reaktiven Gruppen (b) und der höherfunktionellen Säure (d) 0,1 bis 10 Gew.-% beträgt.

6. Pultrusionsharzsystem nach einem der Ansprüche 1 bis 5, **dadurch gekennzeichnet, dass** die höherfunktionelle Säure (d) mindestens eine weitere gegenüber Isocyanaten funktionale Gruppe aufweist.

7. Pultrusionsharzsystem nach einem der Ansprüche 1 bis 6, **dadurch gekennzeichnet, dass** als Di- und Polyisocyanate (a) polymeres MDI mit einer mittleren Funktionalität von 2,1 bis 2,8 eingesetzt wird.

8. Pultruslonsharzsystem nach einem der Ansprüche 1 bis 7, **dadurch gekennzeichnet, dass** die Verbindungen mit mindestens zwei gegenüber Isocyanaten reaktiven Gruppen (b) Polyetherole mit einer mittleren Funktionalität von 2 bis 4 und einem Gehalt an sekundären OH-Gruppen vom mindestens 50 % aufweisen.

9. Pultrusionsharzsystem nach einem der Ansprüche 1 bis 8, **dadurch gekennzeichnet, dass** die Verbindungen mit mindestens zwei gegenüber Isocyanaten reaktiven Gruppen (b) eine mittlere OH-Zahl von 100 bis 1000 mg KOH/g aufweist.

10. Pultrusionsharzsystem nach einem der Ansprüche 1 bis 9, **dadurch gekennzeichnet, dass** das Pultrusionsharzsystem unmittelbar nach Vermischen der Komponenten (a) bis (e) eine Viskosität von kleiner 1500 mPas bei 25 °C aufweist.

11. Pultrusionsharzsystem nach einem der Ansprüche 1 bis 10, **dadurch gekennzeichnet, dass** das Pultrusionsharzsystem weniger als 2,0 Gew.-% Stoffe enthält, die einen Siedepunkt von kleiner 200 °C bei Normaldruck aufweisen..

12. Verfahren zur Herstellung eines Pultrudats bei dem man Pultrusionsharzsystem nach einem der Ansprüche 1 bis 10 vermischt, ein Fasermaterial damit benetzt und aushärtet.

13. Verfahren nach Anspruch 12, **dadurch gekennzeichnet, dass** man das benetzte Fasermaterial durch ein Formwerkzeug zieht und aushärtet, wobei das Formwerkzeug eine Temperatur von 150 °C bis 250 °C aufweist.

14. Verfahren nach Anspruch 12 oder 13, **dadurch gekennzeichnet, dass** die Abzugsgeschwindigkeit, mirder das benetzte Fasermaterial durch die Form gezogen wird. größer als ein Meter pro Minute ist.

15. Verfahren nach einem der Ansprüche 12 bis 14, **dadurch gekennzeichnet, dass** der Gehalt an Fasermaterial 30 bis 90 Gew.-% beträgt.

16. Pultrudat, herstellbar nach einem Verfahren gemäß einem der Ansprüche 12 bis 15.

## Claims

1. A pultrusion resin system, comprising
a) di- or polyisocyanates,
b) compounds having at least two groups reactive toward isocyanates,
c) catalyst,
d) polybasic acid with functionality greater than or equal to 2 and, optionally,
e) further auxiliaries and additives,
where the boiling point of the polybasic acid is at least 200°C at standard pressure and it is soluble in the compound having at least two groups reactive toward isocyanates.

2. The pultrusion resin system according to claim 1, wherein the acid number of the polybasic acid is from 50 to 1000 mg KOH/g.

3. The pultrusion resin system according to claim 1 or 2, wherein the molar ratio of oxygen atoms to carbon atoms in the polybasic acid (d) is at least 1 : 5.

4. The pultrusion resin system according to any of claims 1 to 3, wherein the polybasic acid (d) is a condensate derived from an at least dibasic acid and from a compound having groups reactive toward acid.

5. The pultrusion resin system according to any of claims 1 to 4, wherein the proportion of the polybasic acid (d), based on the total weight of the compounds (b) having at least two groups reactive toward isocyanates and of the polybasic acid (d) is from 0.1 to 10% by weight.

6. The pultrusion resin system according to any of claims 1 to 5, wherein the polybasic acid (d) has at least one further group having functionality toward isocyanates.

7. The pultrusion resin system according to any of claims 1 to 6, wherein the di- and polyisocyanates (a) used comprise polymeric MDI having an average functionality of from 2.1 to 2.8.

8. The pultrusion resin system according to any of claims 1 to 7, wherein the compounds (b) having at least two groups reactive toward isocyanates comprise polyetherols having an average functionality of from 2 to 4 and having at least 50% content of secondary OH groups.

9. The pultrusion resin system according to any of claims 1 to 8, wherein the average OH number of the compounds (b) having at least two groups reactive toward isocyanates is from 100 to 1000 mg KOH/g.

10. The pultrusion resin system according to any of claims 1 to 9, the viscosity of which is smaller than 1500 mPas at 25°C immediately after mixing of components (a) to (e).

11. The pultrusion resin system according to any of claims 1 to 10, which comprises less than 2.0% by weight of substances which have a boiling point of less than 200°C at standard pressure.

12. A process for producing a pultrudate, in which the pultrusion resin system according to any of claims 1 to 10 is mixed, and a fiber material is wetted therewith and hardened.

13. The process according to claim 12, wherein the wetted fiber material is drawn through a die and hardened, where the temperature of the die is from 150°C to 250°C.

14. The process according to claim 12 or 13, wherein the take-off speed at which the wetted fiber material is drawn through the die is greater than one meter per minute.

15. The process according to any of claims 12 to 14, wherein the content of fiber material is from 30 to 90% by weight.

16. A pultrudate, capable of production by a process according to any of claims 12 to 15.

## Revendications

1. Système de résine de pultrusion, contenant
a) des di- ou polyisocyanates,
b) des composés comportant au moins deux groupes réactifs vis-à-vis d'isocyanates,
c) un catalyseur,
d) un acide à haute fonctionnalité, ayant une fonctionnalité égale ou supérieure à 2 et éventuellement
e) d'autres additifs et adjuvants,
l'acide à haute fonctionnalité ayant un point d'ébullition d'au moins 200 °C sous la pression normale et étant soluble dans le composé comportant au moins deux groupes réactifs vis-à-vis d'isocyanates.

2. Système de résine de pultrusion selon la revendication 1, **caractérisé en ce que** l'acide à haute fonctionnalité présente un indice d'acide de 50 à 1 000 mg de KOH/g.

3. Système de résine de pultrusion selon la revendication 1 ou 2, **caractérisé en ce que** le rapport molaire des atomes d'oxygène aux atomes de carbone de l'acide à haute fonctionnalité (d) est égal à au moins 1 : 5.

4. Système de résine de pultrusion selon l'une quelconque des revendications 1 à 3, **caractérisé en ce que** l'acide à haute fonctionnalité (d) est un produit de condensation d'un acide au moins bifonctionnel avec un composé comportant des groupes réactifs vis-à-vis d'un acide.

5. Système de résine de pultrusion selon l'une quelconque des revendications 1 à 4, **caractérisé en ce que** la proportion de l'acide à haute fonctionnalité (d), par rapport au poids total des composés (b) comportant au moins deux groupes réactifs vis-à-vis d'isocyanates et de l'acide à haute fonctionnalité (d), vaut de 0,1 à 10 % en poids.

6. Système de résine de pultrusion selon l'une quelconque des revendications 1 à 5, **caractérisé en ce que** l'acide à haute fonctionnalité (d) comporte au moins un autre groupe fonctionnel vis-à-vis d'isocyanates.

7. Système de résine de pultrusion selon l'une quelconque des revendications 1 à 6, **caractérisé en ce qu'**on utilise comme di- et polyisocyanates (a) un MDI polymère ayant une fonctionnalité moyenne de 2,1 à 2,8.

8. Système de résine de pultrusion selon l'une quelconque des revendications 1 à 7, **caractérisé en ce que** les composés (b) comportant au moins deux groupes réactifs vis-à-vis d'isocyanates comportent des polyétherpolyols ayant une fonctionnalité moyenne de 2 à 4 et ont une teneur en groupes OH secondaires d'au moins 50 %.

9. Système de résine de pultrusion selon l'une quelconque des revendications 1 à 8, **caractérisé en ce que** les composés (b) comportant au moins deux groupes réactifs vis-à-vis d'isocyanates présentent un indice moyen de groupes OH de 100 à 1 000 mg de KOH/g.

10. Système de résine de pultrusion selon l'une quelconque des revendications 1 à 9, **caractérisé en ce que** le système de résine de pultrusion présente immédiatement après mélange des composants (a) à (e) une viscosité inférieure à 1 500 mPa.s à 25 °C.

11. Système de résine de pultrusion selon l'une quelconque des revendications 1 à 10, **caractérisé en ce que** le système de résine de pultrusion contient moins de 2,0 % en poids de substances qui ont un point d'ébullition inférieur à 200 °C sous la pression normale.

12. Procédé pour la préparation d'un produit de pultrusion, dans lequel on mélange un système de résine de pultrusion selon l'une quelconque des revendications 1 à 10, on imprègne avec celui-ci un matériau fibreux et on le fait durcir.

13. Procédé selon la revendication 12, **caractérisé en ce qu'**on tire à travers un outil de formage le matériau fibreux imprégné et on le fait durcir, l'outil de formage présentant une température de 150 °C à 250 °C.

14. Procédé selon la revendication 12 ou 13, **caractérisé en ce que** la vitesse de tirage, à laquelle le matériau fibreux imprégné est tiré à travers l'outil de formage, est supérieure à un mètre par minute.

15. Procédé selon l'une quelconque des revendications 12 à 14, **caractérisé en ce que** la teneur en matériau fibreux vaut de 30 à 90 % en poids.

16. Produit de pultrusion, pouvant être préparé conformément à un procédé selon l'une quelconque des revendications 12 à 15.
